(19) **Europäisches Patentamt**
**European Patent Office**
**Office européen des brevets**

(11) **EP 3 866 071 B1**

(12) **EUROPEAN PATENT SPECIFICATION**

(45) Date of publication and mention
of the grant of the patent:
**03.12.2025 Bulletin 2025/49**

(21) Application number: **20156963.9**

(22) Date of filing: **12.02.2020**

(51) International Patent Classification (IPC):
**G06V 10/40** *(2022.01)*

(52) Cooperative Patent Classification (CPC):
**G06N 3/04; G06N 3/0464; G06N 3/08; G06N 3/09;**
**G06V 10/454;** G06N 5/01; G06N 20/10; G06N 20/20

(54) **DEVICE AND METHOD FOR CLASSIFYING IMAGES USING AN ATTENTION LAYER**

VORRICHTUNG UND VERFAHREN ZUR KLASSIFIZIERUNG VON BILDERN UNTER
VERWENDUNG EINER AUFMERKSAMKEITSSCHICHT

DISPOSITIF ET PROCÉDÉ POUR CLASSER DES IMAGES UTILISANT UNE COUCHE
D'ATTENTION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**18.08.2021 Bulletin 2021/33**

(73) Proprietor: **Robert Bosch GmbH**
**70442 Stuttgart (DE)**

(72) Inventors:
• **Nguyen, Duc Tam**
**76133 Karlsruhe (DE)**
• **Tan, Andong**
**70435 Stuttgart-Zuffenhausen (DE)**

(56) References cited:
• **BELLO IRWAN ET AL: "Attention Augmented Convolutional Networks", 2019 IEEE/CVF INTERNATIONAL CONFERENCE ON COMPUTER VISION (ICCV), IEEE, 27 October 2019 (2019-10-27), pages 3285 - 3294, XP033723704, DOI: 10.1109/ICCV.2019.00338**
• **LIU XIAOXIAO ET AL: "A survey on deep neural network-based image captioning", VISUAL COMPUTER, SPRINGER, BERLIN, DE, vol. 35, no. 3, 9 June 2018 (2018-06-09), pages 445 - 470, XP036727418, ISSN: 0178-2789, [retrieved on 20180609], DOI: 10.1007/S00371-018-1566-Y**
• **PAU RODR⬦GUEZ ET AL: "A PAINLESS ATTENTION MECHANISM FOR CONVOLU- TIONAL NEURAL NETWORKS", 15 February 2018 (2018-02-15), XP055719793, Retrieved from the Internet <URL:https://openreview.net/pdf? id=rJe7FW-Cb> [retrieved on 20200803]**

**Description**

The invention concerns a method for classifying images, a computer program, a machine-readable storage medium, and a control system.

Prior art

"Attention Augmented Convolutional Networks", Irwan Bello, Barret Zoph, Ashish Vaswani, Jonathon Shlens, Quoc V. Le, arXiv preprint arXiv:1904.09925v4, 2019 discloses a neural network with a two-dimensional relative self-attention mechanism for image classification.

Advantages of the invention

Many real-world devices feature image sensors, which are responsible for perceiving the environment around the device. The received images can be used in order to extract information around the environment and have the device act accordingly. Typically, this requires classifying the content of the perceived images using an image classifier. The image classifier predicts desired information based on the image. For example, an image classifier used in an at least partially autonomous vehicle may classify the surrounding road as wet or dry based on a perceived image. However, image classifiers are not perfect and may misclassify certain images. The general ability of an image classifier to classify images correctly is known as performance. It is obvious, that a high performance is of the utmost importance, especially if the classifications are used for controlling a device. A low performance of the image classifier may lead to unwanted and/or unsafe behavior of the device.

The method with features of independent claim 1 has the advantage to further improve the classification accuracy over the prior art as dislcosed in LIU XIAOXIAO ET AL: "A survey on deep neural network-based image captioning",VISUAL COMPUTER, SPRINGER, BERLIN, DE, vol. 35, no. 3, 9 June 2018 ), pages 445-470, DOI: 10.1007/S00371-018-1566-Y.

Further improvements are presented in the dependent claims.

Disclosure of the invention

In a first aspect, the invention as defined in claim 1 is concerned with a computer-implemented method for classifying images using an image classifier that comprises at least one attention layer, wherein the method comprises the following steps:

- Providing an input activation map to the attention layer, wherein the input activation map is determined depending on the image;
- Providing, in the attention layer, a correlation matrix comprising a plurality of entries, wherein each of the entries characterizes a relative dependence of a first pixel of the input activation map on a second pixel of the input activation map, further wherein the correlation matrix depends on a prior matrix;
- Obtaining an attention layer output depending on the input activation map and the correlation matrix;
- Computing a classification of the image depending on the attention layer output.

The term image classifier can be understood as a method, which determines one or many class labels for an image or parts of an image. The result can in turn be used to control a device. For example, an image classifier may be employed as part of a perception pipeline of an autonomous vehicle. In this scenario, the image classifier can be used in order to detect whether the vehicle is currently located in an urban neighborhood, a rural area or a highway. This information may in turn be used in order to activate and/or deactivate certain driving functions, driving maneuvers and/or speed limitations.

In general, the image classifier may determine different kinds of class labels. For example, it can determine whether an object is present or not at a certain location of an image. This approach is known as object detection. Using the example of an autonomous vehicle, object detection can be used to detect other road participants, especially pedestrians, other vehicles and cyclists, in order to, e.g., plan a safe trajectory.

Another common task that the image classifier can be used for is semantic segmentation. Here, each element of the image is assigned a class label from the image classifier. Using the example from above, the image classifier may be used to classify each pixel of a camera image as belonging to either a drivable or a non-drivable space. This information can be used in order to determine a safe trajectory.

The image classifier is understood to comprise a model on which classification decisions are based. For example, the model may be a statistical model, especially a machine-learning model. Alternatively, the model may be rule-based, i.e., the classification decision may be based on a set of rules regarding the relationship between the image to be classified and the classification decision. Alternatively, the model may comprise one or more statistical models and/or one or more rule-based models.

In general, the image classifier can receive image data of various modalities, especially sensor image data as provided by video, radar, LIDAR and/or ultrasonic sensors as well as images provided by thermal cameras. Image data may also comprise audio signals as provided by one or more microphones, e.g., as spectral images. Images can be provided by a sensor directly. Alternatively, images may also be provided by some form of storage unit, e.g., a hard drive and/or a flash drive and/or a solid state disk, which comprises previously recorded images.

The output of the image classifier can be considered a prediction about the image it is provided based on the image classifier's knowledge, which is encoded in the image classifier's model. This prediction may be incorrect if the model is insufficient for a given image datum. In this sense, performance of the image classifier may be understood as a measure for how well an image classifier is able to predict a desired class label. If the classification output is used as part of controlling a device, it is of high importance to achieve as high of a performance as possible as incorrect classifications may cause unwanted and/or unsafe behavior of the device.

In the context of this invention, an image classifier is understood to comprise a plurality of layers, which extract information and may provide this information to one or multiple other layers. The layers are organized in a predefined topology in which the order is determined by the flow of information. If a first layer provides input to a second layer, the second layer is considered to follow the first layer while the first layer precedes the second layer. An input layer is considered to have no preceding layer and to provide an image to one and/or multiple layers of the image classifier. A final layer of an image classifier is a first layer, which is not followed by a second layer. The final layer and/or layers provide the output of the image classifier.

A typical example of an image classifier is a neural network but other types of image classifiers, e.g., support vector machines, stacked support vector machines or random forests, also follow the layered design.

The advantage of this design is that the different layers provide increasingly abstract representations of the input data. It is known from the literature, that layers, which occur early in an image classifier, typically extract low-level representations of the image, which can encode information about the image such as edges, while layers, which occur later in the classifier, can extract high-level representations encoding information about, e.g., objects or parts of objects.

An image classifier can contain parameters, which control the image classifier's output given the input. For example, a layer of an image classifier may obtain its output by a linear transformation of its input. In this case, the parameters of the transformation would be part of the image classifier's parameters.

In case of an image classifier containing parameters, the classification behavior can be trained by adapting the parameters. In this context, training is understood as adapting the parameters of the image classifier with the goal of obtaining a desired classification for one or multiple given images. This can happen in an, e.g., supervised manner, where the image classifier is provided with tuples of input images and desired output classifications. The parameters can then, for example, be updated such that a desired output classification can be achieved.

When classifying images, each layer of the image classifier provides one or many activation maps. In the context of the invention, activation maps are understood as representations of the image. Activation maps comprise pixels, where each pixel can encode information about a certain area of the image in form of, e.g., a vector. Activation maps can conventionally be realized as tensors of a certain height, width and depth. In this scenario, the pixels can be located along the height and width of the tensor with each pixel's information stored along the depth of the tensor. In this context, a pixel $i$ can be described by $(i_x, i_y)$, where $i_x$ is the pixel position along the width of the attention map and $i_y$ is the pixel position along the height of the attention map. The image itself can be viewed as an activation map, which is provided by the input layer of the image classifier.

In the context of this invention, the image classifier is understood to comprise an attention layer. The advantage of the attention layer is that it can be used in order to provide information for relevant parts of the input image and/or intermediate representations provided by layers of the image classifier with respect to the desired classification. If, for example, the image classifier is tasked to predict objects, the attention layer may provide non-zero values to any following layer for areas of the image, which contain objects to be detected. For all other areas of the image, the attention layer can provide non-zero vectors for relevant pixels in the attention layer output, which is also an activation map. In this scenario, all other parts of the attention layer may provide small or zero values in order for irrelevant information to be filtered out. This can be used effectively to mask out irrelevant parts of the image with respect to the classification task.

The attention layer comprises a correlation matrix, which can be understood to encode relative dependencies between pixels with respect to the output. For example, if a car is partly occluded, its shade may still give information about the general position of the car itself. Hence, a pixel showing an object obstructing the car may depend on a pixel showing the shade of the car.

The correlations in the correlation matrix may be determined prior to using the image classifier. It can also be envisioned that the correlations are at least partly defined before training the image classifier and can be refined during training. Furthermore, it can be envisioned, that the correlation matrix values are obtained by using one or multiple prior values in conjunction with one or many values learned during training of the image classifier.

The correlation matrix can be of a 2-dimensional shape. In this case, the pixels of the attention layer input can be organized such that they are stacked. In this case, each row of the attention layer input represents one pixel and the entry at height i and width j of the correlation matrix represents the dependence of the pixel at row i on the pixel of row j of the attention layer input.

The correlation matrix is obtained through a transformation of the prior matrix. The advantage of using a prior matrix is that the image classifier comprises less model parameters, which have to be adapted during training of the classifier. This improves both the memory consumption as well as reducing the number of computing operations, which in turn saves electricity when running the classifier on a computer. Additionally, reducing the number of trainable parameters can be viewed as regularization, which is known to improve the performance of an image classifier, where the performance is understood to be the classification accuracy of the classifier.

In the first aspect, it can be further envisioned that the step of computing the attention layer output comprises the steps of:

- Obtaining a normalized correlation matrix, wherein the normalized correlation matrix is obtained by normalizing the correlation matrix;
- Obtaining the attention layer output by multiplying the normalized correlation matrix with a first intermediate representation that is obtained based on the input activation map.

The advantage of normalizing the correlation matrix is that the weights may be adapted according to a predefined normalization scheme, which may have a positive effect on the classification performance. For example, values in the correlation matrix may be exponentially amplified before normalization. This has the effect of the attention layer focusing on a few number of pixels when determining relevance for a given pixel. In turn, this has the advantage of extracting more precise and condensed information, which in turn improves the classification performance.

The advantage of multiplying the normalized correlation matrix with the first intermediate representation is that the attention layer is able to enrich the attention layer input with further information. If the normalized correlation matrix would be multiplied to the attention layer input, it could only forward the information from the attention layer input with certain parts being masked out. In contrast, if an intermediate representation is chosen, the intermediate representation may encode higher-level information extract from the attention layer input. For example, the intermediate representation may transform the pixel values of the image into general information about objects. This gives the classifier more information concerning the input and allows it to base its decision on concise and discriminative aspects of the input, which in turn leads to an improved performance.

In the first aspect, it can be further envisioned that the prior matrix is obtained using a Euclidian distance between a first pixel and a second pixel of the input activation map.

The advantage of the correlation matrix depending on Euclidean distance is that it can effectively encode dependencies of local neighborhoods. In most situations, neighboring pixels of the attention layer input can have strong correlations. This can be used to predefine the correlation matrix to an at least partial degree. This saves both memory and reduces the number of computations, which in turn reduces the amount of energy used for applying this method when training the image classifier. In addition, this approach regularizes the image classifier. It is known from the literature that regularization increases the performance of an image classifier, where performance refers to the ability to correctly classify an image.

In the first aspect, it can be further envisioned that the prior matrix comprises prior matrix entries, which are computed according to the formula

$$G_{i,j} = \exp\left(\frac{\left(\frac{(i_x - j_x)k}{W}\right)^2 + \left(\frac{(i_y - j_y)k}{H}\right)^2}{-2\sigma^2}\right),$$

where W is a width and H is a height of the input activation map and k and $\sigma$ are predefined parameters.

Setting the entries of the prior matrix this way encodes the prior assumption that neighboring pixels have dependencies on a centering pixel based on a multi-variate Gaussian distribution.

In the first aspect, it can be further envisioned that the step of computing the attention layer output further comprises a step of multiplying the input activation map with a first matrix in order to obtain the first intermediate representation.

The advantage of this approach is that the attention layer does not only forward masked information from the attention layer input but can also enrich the attention layer input with additional information by transforming it. This way, the attention layer can extract higher-level representations of the image instead of only forwarding existing representations.

In the first aspect, it can be further envisioned that each entry of the correlation matrix further depends on the respective prior matrix entry according to the formula

$$C_{i,j} = \log(1 + G_{i,j}) \,.$$

Obtaining the correlation matrix this way has the advantage that it can be readily defined prior to training the image classifier. This has the advantage that the correlation matrix does not vary during training of the classifier, which in turn saves memory and reduces the energy consumption when training the image classifier. As described above, this approach also acts as regularization, which in turn improves the image classifier's performance with respect to classification accuracy.

Alternatively, it can be envisioned that the correlation matrix is obtained depending on a product of the input activation map with a second matrix and on a product of the input activation map with a third predefined according to the formula

$$C = \frac{(X_{63} W_q^T)(X_{63} W_k^T)}{c} - G.$$

The matrix $W_q^T$ is understood to be the transposed second matrix $(W_q)$, $W_k^T$ is understood to be the transposed third matrix $(W_k)$ and c is a predefined constant value. The constant c allows regulation of the magnitude of the matrix product in the enumerator of the fraction. When trained with gradient-based methods such as stochastic gradient descent, this has the advantage of scaling the gradients, which in turn leads to a faster converge of the training of the image classifier to the desired outputs. As the overall time to train a classifier is always finite, faster training leads to the image classifier being able to see more images during training and thus learn more information about the data which in turn further improves the performance.

In the first aspect, it can be further envisioned that the first matrix $(W_v)$ and/or the second matrix $(W_q)$ and/or the third matrix $(W_k)$ and/or the parameter $\sigma$ are trained during a training of the image classifier (60).

The advantage of this approach is that the image classifier can learn to select the specific parameters according to the characteristics of the training data, which further improves the performance of the image classifier with respect to classification accuracy.

In the first aspect, it can be further envisioned that the normalized correlation matrix is obtained by applying the softmax function along the rows of the correlation matrix.

Applying the softmax function, scales the values in the correlation matrix exponentially. This can have the effect of the attention layer only focusing on a very small amount of pixels and hence providing a concise and sparse output. This has the advantage that layers following the attention layer can process more concise data, which in turn allows for an easier classification and thus a higher performance of the classifier.

In the first aspect, it can be further envisioned that the normalized correlation matrix is obtained by dividing each row of the correlation matrix by the sum of the elements of the respective row.

By dividing each row by its sum, the values in the correlation matrix are scaled such that the attention layer can focus on a larger amount of pixels. This can be advantageous in situations where a single attention layer output component depends on a large amount of pixels, such as stated above when a pixel shows an obstructed object. In turn, this means that the attention layer may extract relevant regions even when obstructed, which leads to a further improvement in performance.

In the first aspect, it can be further envisioned that the method comprises the further step:

- Determining an actuator control signal for controlling an actuator, depending on the output signal.

The advantage of controlling an actuator based on the output signal of the image classifier is that the image classifier improves the classification performance with respect to prior art. This has the effect that the actuator can be controlled more efficiently, more precisely and safer compared to prior art.

In the first aspect, it can be further envisioned that the actuator controls an at least partially autonomous robot and/or a manufacturing machine and/or an access control system and/or a surveillance system and/or an imaging device.

The advantage having the control of the individual devices depend on the output signal of the image classifier allows them to profit from the image classifier's improved performance compared to prior art. This has the effect of the devices being more efficiently, more precisely and safer compared to prior art.

The term "computer" covers any device for the processing of pre-defined calculation instructions. These calculation instructions can be in the form of software, or in the form of hardware, or also in a mixed form of software and hardware.

It is further understood that the procedures cannot only be completely implemented in software as described. They can also be implemented in hardware, or in a mixed form of software and hardware.

Embodiments of the invention will be discussed with reference to the following figures in more detail. The figures show:

Figure 1     a control system comprising an image classifier controlling an actuator in its environment;

Figure 2     the control system controlling an at least partially autonomous robot;

Figure 3     the control system controlling a manufacturing machine;

Figure 4     the control system controlling an automated personal assistant;

Figure 5     the control system controlling an access control system;

Figure 6     the control system controlling a surveillance system;

Figure 7     the control system controlling an imaging system;

Figure 8     an exemplary structure of the image classifier;

Figure 9     an exemplary structure of the attention layer.

Description of the embodiments

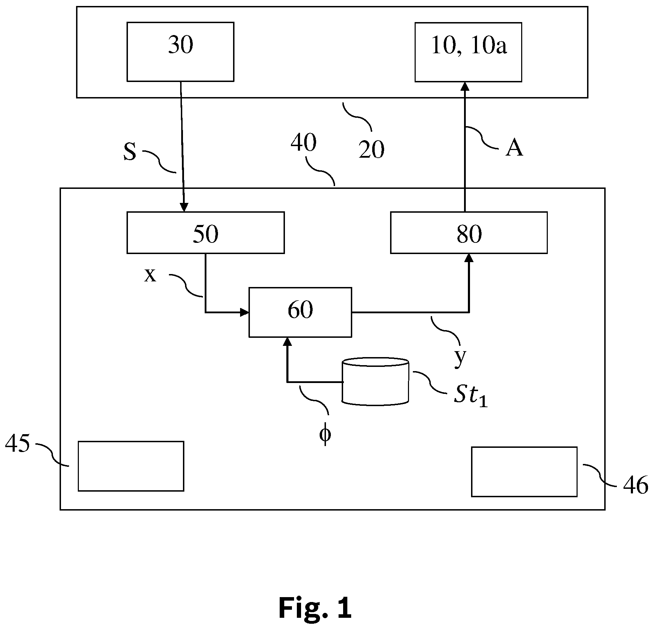

Shown in figure 1 is an embodiment of an actuator (10) in its environment (20). The actuator (10) interacts with a control system (40). An actuator (10) may be a technical system that is capable of receiving actuator control commands (A) and of acting in accordance with said received actuator control commands (A). The actuator (10) and its environment (20) will be jointly called actuator system. At preferably evenly spaced points in time, a sensor (30) senses a condition of the actuator system. The sensor (30) may comprise several sensors. Preferably, the sensor (30) is an optical sensor that takes images of the environment (20). An output signal (S) of the sensor (30) (or, in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of actuator control commands (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into a plurality of input signals (x). Alternatively, in case of no receiving unit (50), each sensor signal (S) may directly be taken as an input signal (x). The input signal (x) may, for example, be given as an excerpt from sensor signal (S). Alternatively, the sensor signal (S) may be processed to yield the input signal (x). The input signal (x) may comprise image data corresponding to an image recorded by the sensor (30), or it may comprise audio data, for example if the sensor (30) is an audio sensor. In other words, input signal (x) may be provided in accordance with the sensor signal (S).

The input signal (x) is then passed on to an image classifier (60), which may, for example, be given by an artificial neural network.

The image classifier (60) is parametrized by parameters ($\xi$), which are stored in and provided by a parameter storage ($St_1$).

The image classifier (60) determines one or many output signals (y) from the input signals (x). The output signals (y) comprise information that assign one or more labels to the input signal (x). The output signals (y) is transmitted to an optional conversion unit (80), which converts the output signals (y) into the actuator control commands (A). The actuator control commands (A) are then transmitted to the actuator (10) for controlling the actuator (10) accordingly. Alternatively, the output signals (y) may directly be taken as actuator control commands (A).

The actuator (10) receives the actuator control commands (A), is controlled accordingly and carries out an action corresponding to the actuator control commands (A). The actuator (10) may comprise a control logic, which transforms the actuator control commands (A) into a further control command, which is then used to control the actuator (10).

In further embodiments, the control system (40) may comprise the sensor (30). In even further embodiments, the control system (40) alternatively or additionally may comprise the actuator (10).

In still further embodiments, it may be envisioned that the control system (40) controls a display (10a) additionally or instead of the actuator (10).

Furthermore, the control system (40) may comprise a processor (45) (or a plurality of processors) and at least one machine-readable storage medium (46) on which instructions are stored which, if carried out, cause the control system (40) to carry out a method according to one aspect of the invention.

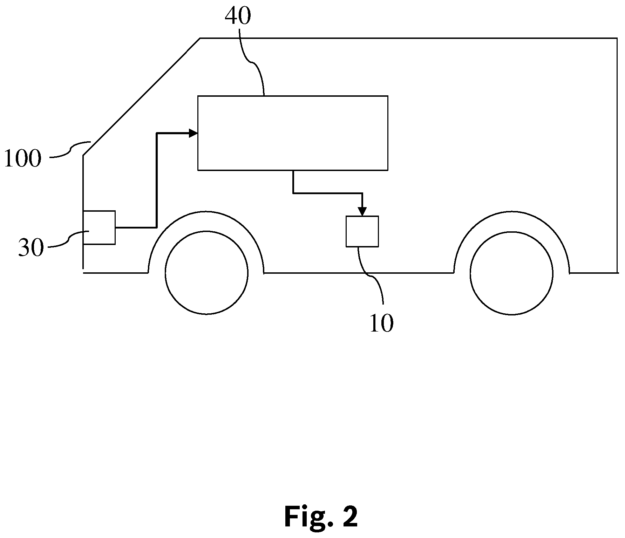

Figure 2 shows an embodiment in which the control system (40) is used to control an at least partially autonomous robot, e.g. an at least partially autonomous vehicle (100).

The sensor (30) may comprise one or more video sensors and/or one or more radar sensors and/or one or more ultrasonic sensors and/or one or more LiDAR sensors and/or one or more position sensors (like e.g. GPS). Some or all of these sensors are preferably but not necessarily integrated in the vehicle (100). Alternatively or additionally, the sensor (30) may comprise an information system for determining a state of the actuator system. One example for such an information system is a weather information system that determines a present or future state of the weather in the environment (20).

For example, using the input signal (x), the image classifier (60) may, for example, detect objects in the vicinity of the at least partially autonomous robot. The output signals (y) may comprise information that characterizes where objects are located in the vicinity of the at least partially autonomous robot. The control command (A) may then be determined in accordance with this information, for example to avoid collisions with the detected objects.

The actuator (10), which is preferably integrated in the vehicle (100), may be given by a brake and/or a propulsion system and/or an engine and/or a drivetrain and/or a steering of the vehicle (100). The actuator control commands (A) may be determined such that the actuator or actuators (10) is/are controlled such that the vehicle (100) avoids collisions with the detected objects. Detected objects may also be classified according to what the image classifier (60) deems them most likely to be, e.g. pedestrians or trees, and actuator control commands (A) may be determined depending on the classification.

In one embodiment the image classifier (60) may be designed to identify lanes on a road ahead, e.g. by classifying a road surface and markings on the road, and identifying lanes as patches of road surface between said markings. Based on an output of a navigation system, a suitable target lane for pursuing a chosen path can then be selected, and depending on a present lane and the target lane, it may then be decided whether the vehicle (100) is to switch lanes or stay in the present lane. An actuator control command (A) may then be computed by, e.g., retrieving a predefined motion pattern from a database corresponding to the identified action.

Likewise, upon identifying road signs or traffic lights, depending on an identified type of road sign or an identified state of said traffic lights, corresponding constraints on possible motion patterns of the vehicle (100) may then be retrieved from e.g. a database, a future path of the vehicle (100) commensurate with said constraints may be computed, and the actuator control command (A) may be computed to steer the vehicle such as to execute the trajectory.

Likewise, upon identifying pedestrians and/or other vehicles, a projected future behavior of said pedestrians and/or other vehicles may be estimated, and based on said estimated future behavior, a trajectory may then be selected such as to avoid collision with the pedestrian and/or the other vehicle, and the actuator control command (A) may be computed to steer the vehicle such as to execute the trajectory.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, the actuator command control (A) may be determined such that the propulsion unit and/or steering and/or brake of the mobile robot are controlled such that the mobile robot may avoid collisions with said identified objects.

In a further embodiment, the at least partially autonomous robot may be given by a gardening robot (not shown), which uses the sensor (30), preferably an optical sensor, to determine a state of plants in the environment (20). The actuator (10) may be a nozzle for spraying chemicals and/or other liquids. Depending on an identified species and/or an identified state of the plants, an actuator control command (A) may be determined to cause the actuator (10) to spray the plants with a suitable quantity of suitable chemicals and/or liquids.

In even further embodiments, the at least partially autonomous robot may be given by a domestic appliance (not shown), like e.g. a washing machine, a stove, an oven, a microwave, or a dishwasher. The sensor (30), e.g. an optical sensor, may detect a state of an object that is to undergo processing by the household appliance. For example, in the case of the domestic appliance being a washing machine, the sensor (30) may detect a state of the laundry inside the washing machine based on the sensor signal (S). The actuator control commands (A) may then, for example, be determined depending on a detected material of the laundry.

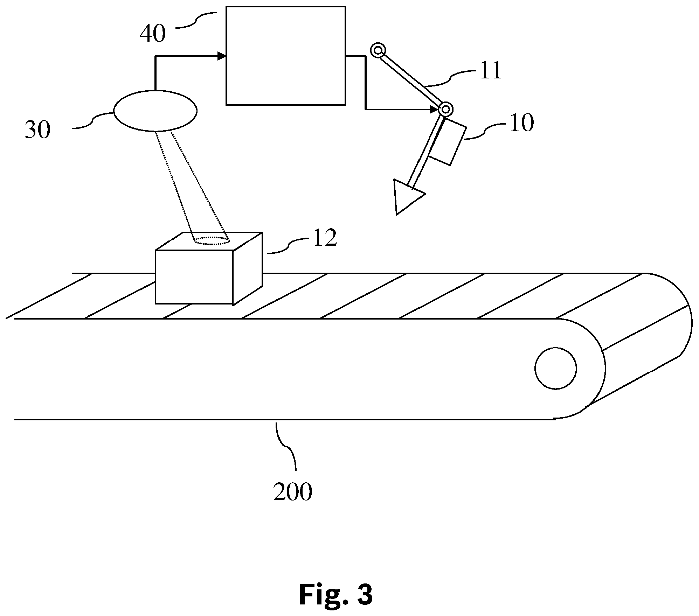

Shown in figure 3 is an embodiment in which the control system (40) is used in order to control a manufacturing machine (11, e.g. a punch cutter, a cutter, a gun drill or a gripper) of a manufacturing system (200), e.g. as part of a production line. The control system (40) controls an actuator (10) which in turn controls the manufacturing machine (11).

The sensor (30) may be given by an optical sensor that captures properties of e.g. a manufactured product (12). The image classifier (60) may determine a state of the manufactured product (12) from these captured properties, e.g. whether the manufactured product (12) is faulty or not. The actuator (10) which controls the manufacturing machine (11) may then be controlled depending on the determined state of the manufactured product (12) for a subsequent manufacturing step of manufactured product (12). Alternatively, it may be envisioned that the actuator (10) is controlled during manufacturing of a subsequent manufactured product 12 depending on the determined state of the manufactured product (12). For example, the actuator (10) may be controlled to select a manufactured product (12) that has been identified by the image classifier (60) as faulty and sort it into a designated bin, where they may be rechecked before discarding them.

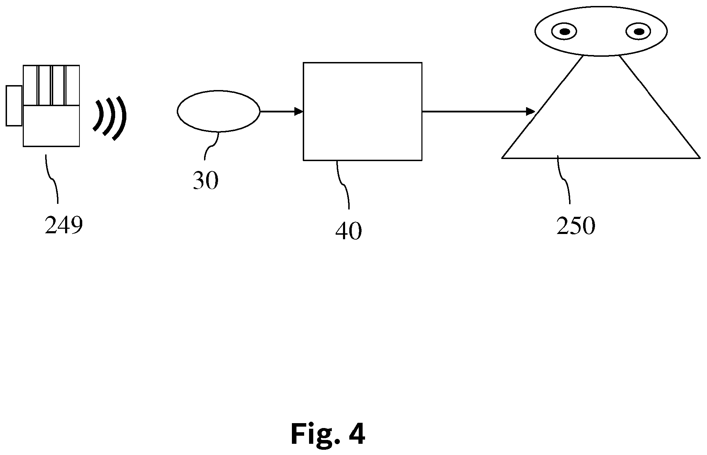

Shown in figure 4 is an embodiment in which the control system (40) is used for controlling an automated personal assistant (250). The sensor (30) may be an optic sensor, e.g. for receiving video images of a gestures of a user (249). Alternatively, the sensor (30) may also be an audio sensor e.g. for receiving a voice command of the user (249) as an audio signal.

The control system (40) then determines the actuator control commands (A) for controlling the automated personal assistant (250). The actuator control commands (A) are determined in accordance with the sensor signal (S) of the sensor (30). The sensor signal (S) is transmitted to the control system (40). For example, the image classifier (60) may be configured to, e.g., carry out a gesture recognition algorithm to identify a gesture made by the user (249). The control system (40) may then determine an actuator control command (A) for transmission to the automated personal assistant (250). It then transmits said actuator control command (A) to the automated personal assistant (250).

For example, the actuator control command (A) may be determined in accordance with the identified user gesture recognized by the image classifier (60). It may then comprise information that causes the automated personal assistant (250) to retrieve information from a database and output this retrieved information in a form suitable for reception by the user (249).

In further embodiments, it may be envisioned that instead of the automated personal assistant (250), the control system (40) controls a domestic appliance (not shown) in accordance with the identified user gesture. The domestic appliance may be a washing machine, a stove, an oven, a microwave or a dishwasher.

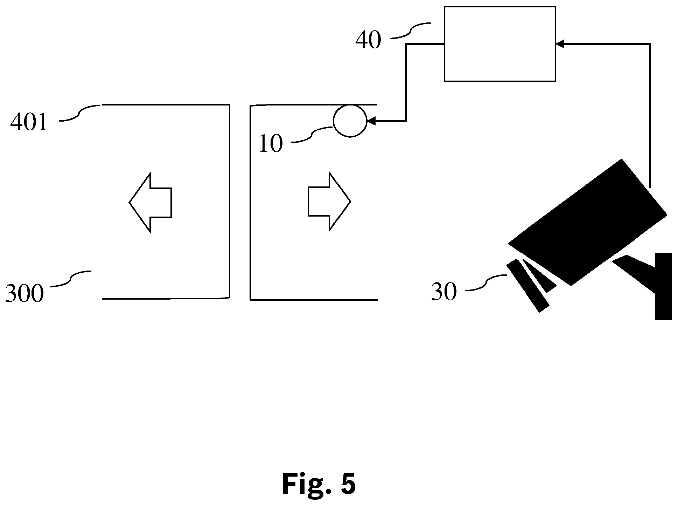

Shown in figure 5 is an embodiment in which the control system (40) controls an access control system (300). The access control system (300) may be designed to physically control access. It may, for example, comprise a door (401). The sensor (30) is configured to detect a scene that is relevant for deciding whether access is to be granted or not. It may for example be an optical sensor for providing image or video data, for detecting a person's face. The image classifier (60) may be configured to interpret this image or video data e.g. by matching identities with known people stored in a database, thereby determining an identity of the person. The actuator control signal (A) may then be determined depending on the interpretation of the image classifier (60), e.g. in accordance with the determined identity. The actuator (10) may be a lock that grants access or not depending on the actuator control signal (A). A non-physical, logical access control is also possible.

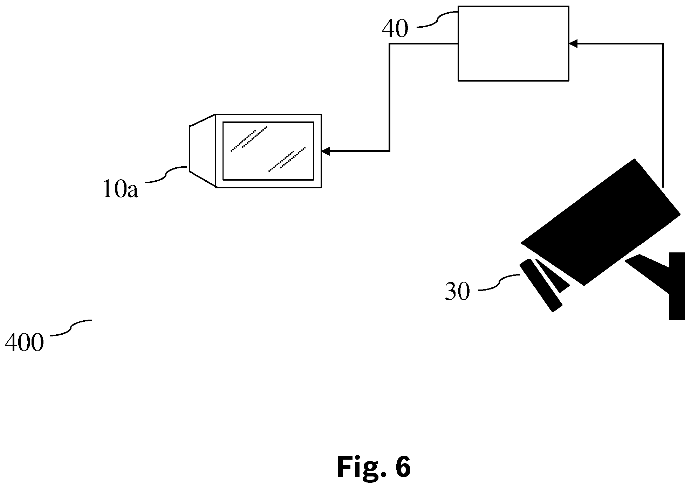

Shown in figure 6 is an embodiment in which the control system (40) controls a surveillance system (400). This embodiment is largely identical to the embodiment shown in figure 5. Therefore, only the differing aspects will be described in detail. The sensor (30) is configured to detect a scene that is under surveillance. The control system (40) does not necessarily control an actuator (10), but can also control a display (10a). For example, the image classifier (60) may determine a classification of a scene, e.g. whether the scene detected by the sensor (30) is suspicious. The actuator control signal (A) which is transmitted to the display (10a) may then, e.g., be configured to cause the display (10a) to adjust the displayed content dependent on the determined classification, e.g. to highlight an object that is deemed suspicious by the image classifier (60).

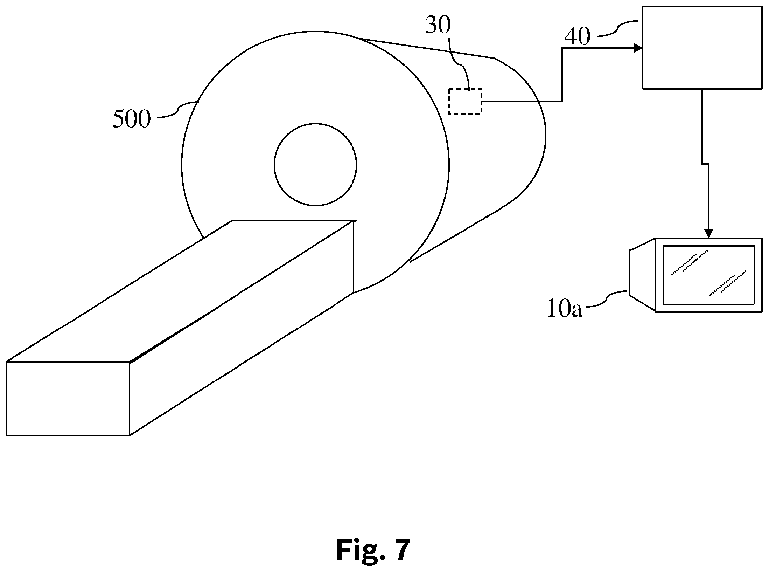

Shown in figure 7 is an embodiment of the control system (40) for controlling an imaging system (500), e.g., an MRI apparatus, x-ray imaging apparatus, a PET imaging apparatus or ultrasonic imaging apparatus. The sensor (30) may, for example, be an imaging sensor. The image classifier (60) may then determine a classification of all or part of the sensed image. The actuator control signal (A) may then be chosen in accordance with this classification, thereby controlling a display (10a). For example, the image classifier (60) may interpret a region of the sensed image to be potentially anomalous. In this case, the actuator control signal (A) may be determined to cause the display (10a) to display the obtained image and highlighting the potentially anomalous region.

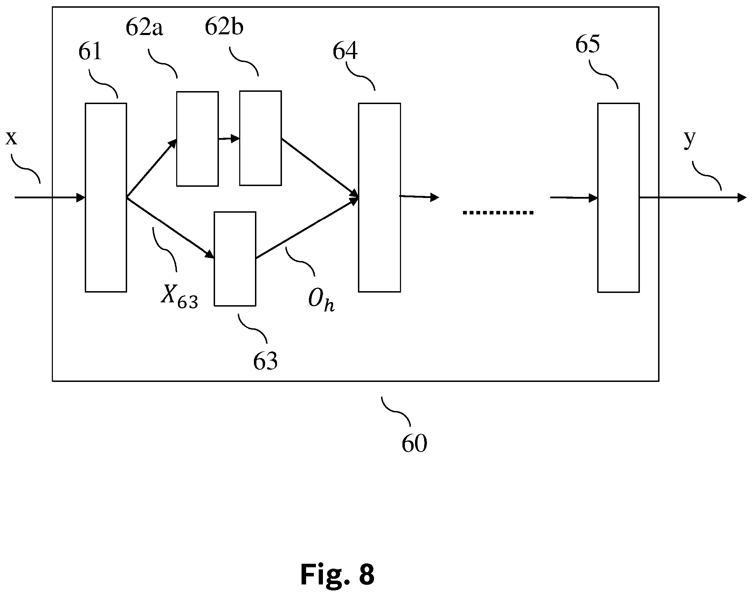

Figure 8 shows a schematic flow chart of the image classifier (60). For the purpose of this embodiment, the image classifier is an artificial neural network. It is made up of layers (61, 62a, 62b, 63, 64, 65) which provide representations ($X_{63}$, $O_h$) of the input signal (x) to preceding layers. The representation and or representations obtained from the last layer (65) can be used as output signals (y)

It can be envisioned that the image classifier (60) comprises an attention layer (63) which accepts an attention layer input ($X_{63}$) from a preceding layer (61) and provides an attention layer output ($O_h$). Optionally, the attention layer input ($X_{63}$) may also be used as input for one or more layers (62a) which operate parallel to the attention layer.

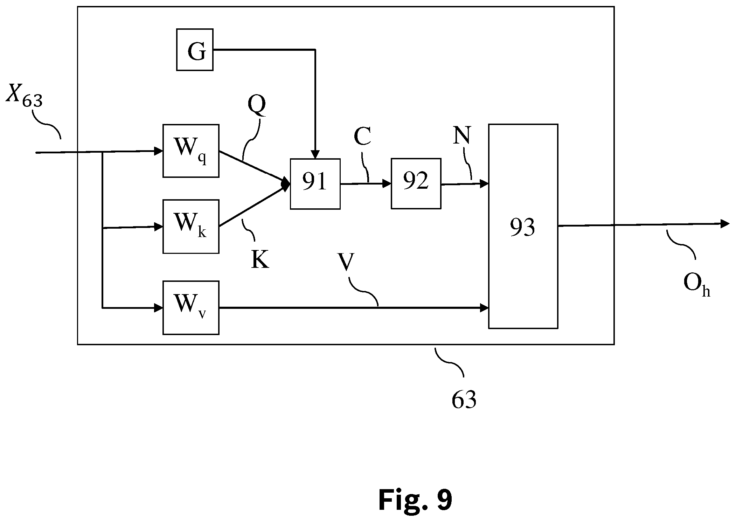

Figure 9 shows a schematic flow chart of the attention layer (63). The attention layer (63) receives an attention layer input ($X_{63}$). The attention layer input may be of the form of an attention map, which stores pixels along a predefined height and width in a tensor. Each pixel is a vector containing information about certain parts of the input image (x). If the attention layer input (x) is represented as a tensor, the pixels can be stacked in order to allow for easy linear transformations via matrix multiplications.

The attention layer input ($X_{63}$) is multiplied with a first matrix ($W_v$) in order to obtain an intermediate representation (V). Optionally, the attention layer input ($X_{63}$) may also be multiplied with a second matrix ($W_q$) and a third matrix ($W_k$) in order to obtain a second intermediate representation (Q) and a third intermediate representation (K). Additionally, a prior matrix (G) is provided in the attention layer. The prior matrix (G) is converted into a correlation matrix (C) in a conversion step (b) according to the formula

$$C_{i,j} = \log(1 + G_{i,j}).$$

Alternatively, if the second intermediate representation (Q) and third intermediate representation (K) are provided in the attention layer, both intermediate representations and the prior matrix (G) can be used in the conversion step (91) in order to obtain the correlation matrix (C) according to the formula

$$C = \frac{(X_{63}W_q^T)(X_{63}W_k^T)}{c} - \bar{G}.$$

In both scenarios, the correlation matrix (C) is transformed to a normalized correlation matrix (N) in a normalization step (92). Normalization can be achieved by applying the softmax function along the rows for the correlation matrix (C) in order to obtain the normalized correlation matrix (N). Alternatively, the normalization matrix (N) can be obtained by dividing each row of the correlation matrix (C) by the sum of the respective row. Having obtained the normalized correlation matrix (N), a multiplication step (93) is performed in which the intermediate representation (V) is multiplied with the normalized correlation matrix (N) in order to obtain the attention layer output ($O_h$).

In further embodiments, the image classifier (60) comprises a multi-headed attention layer (not shown). The multi-headed attention layer can receive an input from one or multiple layers of the image classifier and produce a multi-headed attention layer output. The multi-headed attention layer comprises a plurality of attention layers (63). The multi-headed attention layer input is used as attention layer input ($X_{63}$) for all attention layers (63). Each attention layer provides an attention layer output ($O_h$). The attention layer outputs may be concatenated in order to obtain the multi-headed attention layer output. Alternatively or additionally, the plurality of attention layer outputs may be provided as input to further layers of the image classifier.

## Claims

1. A computer-implemented method for classifying images (x) using an image classifier (60) that comprises at least one attention layer (63), wherein the method comprises the following steps:

   • Providing an input activation map ($X_{63}$) to the attention layer (63), wherein the input activation map ($X_{63}$) is determined depending on the image (x);
   • Providing, in the attention layer (63), a correlation matrix (C) according to the formula

$$C = \log(1 + G)$$

   or

$$C = \frac{(X_{63}W_q^T)(X_{63}W_k^T)}{c} - G,$$

   wherein log is an elementwise logarithm of the matrix 1 + G, $X_{63}$ is the input activation map ($X_{63}$), $W_q$ is a second matrix ($W_q$), $W_k$ is a third matrix ($W_k$), is a scalar, and the entries of G are determined according to the formula>

$$G_{i,j} = \exp\left(\frac{\left(\frac{(i_x - j_x)k}{W}\right)^2 + \left(\frac{(i_y - j_y)k}{H}\right)^2}{-2\sigma^2}\right)$$

wherein $W$ is a width and $H$ is a height of the input activation map ($X_{63}$), ($i_x$, $i_y$) is a first pixel of the input activation map ($X_{63}$), ($i_x$, $i_y$) is a second pixel of the input activation map ($X_{63}$), and $k$ and $\sigma$ are predefined parameters;
• Obtaining a normalized correlation matrix ($N$), wherein the normalized correlation matrix ($N$) is obtained by normalizing the correlation matrix ($C$);
• Obtaining the attention layer output ($O_h$) by multiplying the normalized correlation matrix ($N$) with a first intermediate representation ($V$) that is obtained based on the input activation map ($X_{63}$).
• Computing a classification (y) of the image (x) depending on the attention layer output ($O_h$).

2. The method according to claim 1, wherein the step of computing the attention layer output ($O_h$) further comprises a step of multiplying the input activation map ($X_{63}$) with a first matrix ($W_v$) in order to obtain the first intermediate representation (V).

3. The method according to claim 1 or 2, wherein the first matrix ($W_v$) and/or the second matrix ($W_q$) and/or the third matrix ($W_k$) and/or the parameter $\sigma$ are trained during a training of the image classifier (60).

4. The method according to any of the claims 1 to 3, wherein the normalized correlation matrix ($N$) is obtained by applying the softmax function along the rows of the correlation matrix ($C$).

5. The method according to any of the claims 1 to 3, wherein the normalized correlation matrix ($N$) is obtained by dividing each row of the correlation matrix ($C$) by the sum of the elements of the respective row.

6. The method according to any of the claims 1 to 5, further comprising the step:

   • Determining an actuator control signal (A) for controlling an actuator (10), depending on the output signal (y).

7. The method according to claim 6 in which the actuator (10) controls an at least partially autonomous robot (100) and/or a manufacturing machine (200) and/or an access control system (300) and/or a surveillance system (400) and/or an imaging device (500).

8. Computer program that is configured to cause a computer to carry out the method according to any one of the claims 1 to 6 with all of its steps if the computer program is carried out by a processor (45, 145).

9. Machine-readable storage medium (46, 146) on which the computer program according to claim 8 is stored.

10. Control system (40) for operating an actuator (10), wherein the control system (40) comprises the image classifier (60) for carrying out the method according to claim 6, wherein the control system (40) is further configured to operate the actuator (10) in accordance with the output signal (y) of the image classifier (60).

**Patentansprüche**

1. Computer-implementiertes Verfahren zum Klassifizieren von Bildern (x) unter Verwendung eines Bildklassifizierers (60), der mindestens eine Attention-Schicht (63) umfasst, wobei das Verfahren die folgenden Schritte umfasst:

   • Bereitstellen einer Eingabeaktivierungskarte ($X_{63}$) an die Attention-Schicht (63), wobei die Eingabeaktivierungskarte ($X_{63}$) in Abhängigkeit vom Bild (x) bestimmt wird;
   • Bereitstellen, in der Attention-Schicht (63), einer Korrelationsmatrix (c) gemäß der folgenden Formel:

   $$C = \log(1 + G)$$

   oder

   $$C = \frac{(x_{63}W_q^T)(x_{63}W_q^T)}{c} - G,$$

   wobei log ein elementweiser Logarithmus der Matrix 1 + G ist, $X_{63}$ die Eingabeaktivierungskarte ($X_{63}$) ist, $W_q$ eine zweite Matrix ($W_q$) ist, $W_k$ eine dritte Matrix ($W_k$) ist, c ein Skalar ist und die Einträge von G gemäß der folgenden Formel bestimmt werden:

$$G_{i,j} = \exp \frac{\left(\frac{(i_x - j_x)k}{W}\right)^2 + \left(\frac{(i_y - j_y)k}{H}\right)^2}{-2\sigma^2}$$

wobei W eine Breite und H eine Höhe der Eingabeaktivierungskarte ($X_{63}$) ist, ($i_x$, $i_y$) ein erstes Pixel der Eingabeaktivierungskarte ($X_{63}$) ist, ($j_x$,$j_y$) ein zweites Pixel der Eingabeaktivierungskarte ($X_{63}$) ist und k und σ vordefinierte Parameter sind;

• Erhalten einer normierten Korrelationsmatrix (N), wobei die normierte Korrelationsmatrix (N) durch Normieren der Korrelationsmatrix (C) erhalten wird;

• Erhalten der Attention-Schicht-Ausgabe ($O_h$) durch Multiplizieren der normierten Korrelationsmatrix (N) mit einer ersten Zwischenrepräsentation (V), die basierend auf der Eingabeaktivierungskarte ($X_{63}$) erhalten wird;

• Berechnen einer Klassifikation (y) des Bildes (x) in Abhängigkeit von der Attention-Schicht-Ausgabe ($O_h$).

2. Verfahren nach Anspruch 1, wobei der Schritt zum Berechnen der Attention-Schicht-Ausgabe ($O_h$) ferner einen Schritt zum Multiplizieren der Eingabeaktivierungskarte ($X_{63}$) mit einer ersten Matrix ($W_v$) umfasst, um die erste Zwischenrepräsentation (V) zu erhalten.

3. Verfahren nach Anspruch 1 oder 2, wobei die erste Matrix ($W_v$) und/oder die zweite Matrix ($W_q$) und/oder die dritte Matrix ($W_k$) und/oder der Parameter σ während eines Trainings des Bildklassifizierers (60) trainiert werden.

4. Verfahren nach einem der Ansprüche 1 bis 3, wobei die normierte Korrelationsmatrix (N) durch Anwenden der Softmax-Funktion entlang der Zeilen der Korrelationsmatrix (C) erhalten wird.

5. Verfahren nach einem der Ansprüche 1 bis 3, wobei die normierte Korrelationsmatrix (N) durch Dividieren jeder Zeile der Korrelationsmatrix (C) durch die Summe der Elemente der jeweiligen Zeile erhalten wird.

6. Verfahren nach einem der Ansprüche 1 bis 5, ferner umfassend den folgenden Schritt:

• Bestimmen eines Aktuatorsteuersignals (A) zum Steuern eines Aktuators (10) in Abhängigkeit von dem Ausgabesignal (y).

7. Verfahren nach Anspruch 6, wobei der Aktuator (10) einen zumindest teilweise autonomen Roboter (100) und/oder eine Fertigungsmaschine (200) und/oder ein Zugangskontrollsystem (300) und/oder ein Überwachungssystem (400) und/oder eine Bildgebungsvorrichtung (500) steuert.

8. Computerprogramm, das zum Bewirken, dass ein Computer das Verfahren nach einem der Ansprüche 1 bis 6 mit all seinen Schritten ausführt, wenn das Computerprogramm durch einen Prozessor (45, 145) ausgeführt wird, ausgelegt ist.

9. Maschinenlesbares Speichermedium (46, 146), auf dem das Computerprogramm nach Anspruch 8 gespeichert ist.

10. Steuersystem (40) zum Betreiben eines Aktuators (10), wobei das Steuersystem (40) den Bildklassifizierer (60) zum Ausführen des Verfahrens nach Anspruch 6 umfasst, wobei das Steuersystem (40) ferner dazu ausgelegt ist, den Aktuator (10) gemäß dem Ausgabesignal (y) des Bildklassifizierers (60) zu betreiben.

**Revendications**

1. Procédé mis en œuvre par ordinateur pour la classification d'images (x) en utilisant un classifieur d'images (60) qui comprend au moins une couche d'attention (63), dans lequel le procédé comprend les étapes consistant à :

• fournir une carte d'activation d'entrée ($X_{63}$) à la couche d'attention (63), dans lequel la carte d'activation d'entrée ($X_{63}$) est déterminée en fonction de l'image (x) ;
• fournir, dans la couche d'attention (63), une matrice de corrélation (c) en fonction de la formule

$$C = \log(1 + G)$$

ou

$$C = \frac{(x_{63}W_q^T)(x_{63}W_q^T)}{c} - G,$$

dans lequel log est un logarithme en éléments de la matrice 1 + G, $X_{63}$ est la carte d'activation d'entrée ($X_{63}$), $W_q$ est une deuxième matrice ($W_q$), $W_k$ est une troisième matrice ($W_k$), c est un scalaire, et les entrées de G sont déterminées en fonction de la formule>

$$G_{i,j} = \exp \frac{\left(\frac{(i_x - j_x)k}{W}\right)^2 + \left(\frac{(i_y - j_y)k}{H}\right)^2}{-2\sigma^2}$$

dans lequel W est une largeur et H est une hauteur de la carte d'activation d'entrée ($X_{63}$), ($i_x$, $i_y$) est un premier pixel de la carte d'activation d'entrée ($X_{63}$), ($j_x$, $j_y$) est un second pixel de la carte d'activation d'entrée ($X_{63}$), et k et $\sigma$ sont des paramètres prédéfinis ;
• obtenir une matrice de corrélation normalisée (N), dans lequel la matrice de corrélation normalisée (N) est obtenue en normalisant la matrice de corrélation (C) ;
• obtenir la sortie de couche d'attention ($O_h$) en multipliant la matrice de corrélation normalisée (N) par une première représentation intermédiaire (V) qui est obtenue sur la base de la carte d'activation d'entrée ($X_{63}$).
• calculer une classification (y) de l'image (x) en fonction de la sortie de couche d'attention ($O_h$).

2. Procédé selon la revendication 1, dans lequel l'étape de calcul de la sortie de couche d'attention ($O_h$) comprend en outre une étape de multiplication de la carte d'activation d'entrée ($X_{63}$) par une première matrice ($W_v$) afin d'obtenir la première représentation intermédiaire (V).

3. Procédé selon la revendication 1 ou 2, dans lequel la première matrice ($W_v$) et/ou la deuxième matrice ($W_q$) et/ou la troisième matrice ($W_k$) et/ou le paramètre $\sigma$ sont entrainés pendant un entrainement du classifieur d'images (60).

4. Procédé selon l'une quelconque des revendications 1 à 3, dans lequel la matrice de corrélation normalisée (N) est obtenue en appliquant la fonction softmax le long des rangées de la matrice de corrélation (C).

5. Procédé selon l'une quelconque des revendications 1 à 3, dans lequel la matrice de corrélation normalisée (N) est obtenue en divisant chaque rangée de la matrice de corrélation (C) par la somme des éléments de la rangée respective.

6. Procédé selon l'une quelconque des revendications 1 à 5, comprenant en outre l'étape de :

• déterminer un signal (A) de commande d'actionneur servant à commander un actionneur (10), en fonction du signal (y) de sortie.

7. Procédé selon la revendication 6 dans lequel l'actionneur (10) commande un robot au moins partiellement autonome (100) et/ou une machine de fabrication (200) et/ou un système de commande d'accès (300) et/ou un système de surveillance (400) et/ou un dispositif d'imagerie (500).

8. Programme informatique qui est configuré pour amener un ordinateur à réaliser le procédé selon l'une quelconque des revendications 1 à 6 avec toutes ses étapes si le programme informatique est exécuté par un processeur (45, 145).

9. Support de stockage lisible par machine (46, 146) sur lequel est stocké le programme informatique selon la revendication 8.

10. Système de commande (40) pour faire fonctionner un actionneur (10), dans lequel le système de commande (40) comprend le classifieur d'images (60) pour exécuter le procédé selon la revendication 6, dans lequel le système de commande (40) est configuré en outre pour faire fonctionner l'actionneur (10) en fonction du signal (y) de sortie du classifieur d'images (60).

**Fig. 1**

**Fig. 2**

11

10

40

30

12

200

**Fig. 3**

Fig. 4

**Fig. 5**

40

10a

30

400

**Fig. 6**

**Fig. 7**

**Fig. 8**

EP 3 866 071 B1

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **IRWAN BELLO** ; **BARRET ZOPH** ; **ASHISH VAS-WANI** ; **JONATHON SHLENS** ; **QUOC V. LE**. Attention Augmented Convolutional Networks. *arXiv:1904.09925v4*, 2019

- A survey on deep neural network-based image captioning. **LIU XIAOXIAO et al.** VISUAL COMPUTER. SPRINGER, 09 June 2018, vol. 35, 445-470